# EUROPEAN PATENT SPECIFICATION

(11) **EP 3 965 281 B1**
(45) Date of publication and mention of the grant of the patent: **19.03.2025**
(21) Application number: 21190960.1
(22) Date of filing: 12.08.2021
(51) Int. Cl.: H02M 3/335, H01F 27/32

(54) **ADJUSTABLE SPACER FOR MAGNETIC TRANSFORMERS AND INDUCTORS**
EINSTELLBARER ABSTANDSHALTER FÜR MAGNETISCHE TRANSFORMATOREN UND INDUKTOREN
ESPACEUR RÉGLABLE POUR TRANSFORMATEURS ET INDUCTEURS MAGNÉTIQUES

(30) Priority: 21.08.2020 US 202016999729
(43) Date of publication of application: 09.03.2022
(73) Proprietor: ASTEC INTERNATIONAL LIMITED, Kwun Tong Kowloon (HK)
(72) Inventor: BAUI, Paul, Quezon City (PH); SARQUILLA, Aylwin, Quezon City (PH); ABELLA, Joven, Binangonan (PH)
(74) Representative: Bartholomew, Anna

(56) References cited:
- GB-A- 2 461 509
- GB-A- 692 976
- JP-A- 2018 190 823
- JP-A- H07 235 426
- US-A1- 2011 074 533
- US-B1- 10 742 123

## Description

### FIELD

The present disclosure relates to adjustable spacers, and in particular, adjustable spacers for magnetic transformers and inductors.

### BACKGROUND

This section provides background information related to the present disclosure which is not necessarily prior art.

Electrical components such as transformers and inductors are commonly used in switch-mode power supplies and typically have windings formed of various types of wires and coils. Spacing between the windings within the electrical component is often caused, for example, by one or more spacers which mechanically separate and/or support the windings.

US2011/074533 A1, GB2461509A and JPH07235426A each disclose a switch-mode power supply in accordance with the preamble of claim 1.

GB692976A discloses spacer members for electric coils of an electrical induction apparatus, wherein a space member provides both radial and axial spacing of the coils.

US 10742123 B1 discloses a known switch-mode DC-DC power converter.

### SUMMARY

This section provides a general summary of the disclosure, and is not a comprehensive disclosure of its full scope or all of its features.

According to one aspect of the present disclosure, a switch-mode power supply as recited in independent claim 1 is disclosed. Further aspect of the switch-mode power supply are disclosed in dependent claims 2-7.

According to another aspect of the present disclosure, a method of adjusting a space between adjacent windings (102) of an electrical component (100) of a power circuit of a switch-mode power supply as recited in independent claim 8 is disclosed. Further aspect of the method are disclosed in dependent claims 9-11.

Further aspects and areas of applicability will become apparent from the description provided herein. It should be understood that various aspects of this disclosure may be implemented individually or in combination with one or more other aspects. It should also be understood that the description and specific examples herein are intended for purposes of illustration only and are not intended to limit the scope of the claims.

### DRAWINGS

The drawings described herein are for illustrative purposes only of selected embodiments not all possible implementations, and are not intended to limit the scope of the claims.
Fig. 1 is an exploded view of a transformer.
Figs. 2A-2B are a top views of the transformer of Fig. 1.
Fig. 3 is a perspective view of an adjustable spacer included in the transformer of Fig. 1.
Fig. 4 is a perspective view of example adjustable spacer.
Fig. 5 is a perspective view of an adjustable spacer.
Fig. 6A is a perspective view of an example adjustable spacer.
Fig. 6B is a top view of the adjustable spacer of Fig. 6A.
Fig. 7 is an exploded view of a transformer that includes the adjustable spacer of Fig. 6A.
Figs. 8A-8B are perspective views of the transformer of Fig. 7.
Fig. 9 is a cross-sectional view of the transformer of Fig. 7.
Fig. 10A is a perspective view of another example adjustable spacer.
Fig. 10B is a top view of the adjustable spacer of Fig. 10A.
Fig. 11 is an exploded view of a transformer that includes the adjustable spacer of Fig. 10A.
Figs. 12A-12B are perspective views of the transformer of Fig. 11.
Fig. 13 is a cross-sectional view of the transformer of Fig. 11.
Fig. 14 is a block diagram of a switch-mode power supply (SMPS) including the transformer of Fig. 1.

Corresponding reference numerals indicate corresponding parts or features throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

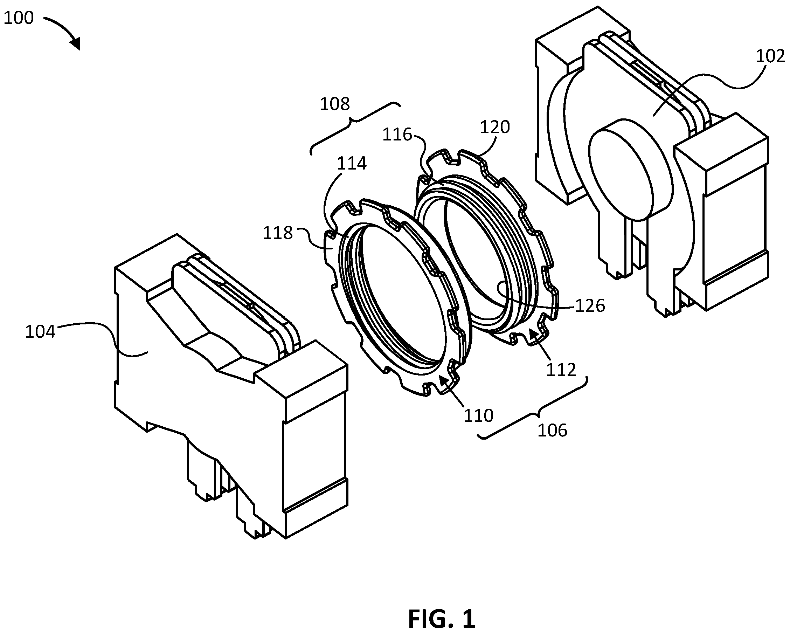

A transformer according to the invention is illustrated in Fig. 1 and indicated generally by reference number 100. The transformer 100 includes a plurality of windings 102 (e.g., primary and secondary windings) and a core 104 which magnetically couples the windings 102. The transformer 100 also includes an adjustable spacer 106 having an adjustable thickness, which serves to mechanically separate and support the windings 102.

The adjustable spacer 106 includes an adjustment mechanism 108 which permits the thickness of the adjustable spacer 106 to be adjusted within a range of thicknesses (as limited by the adjustment mechanism 108, etc.). Because the thickness of the adjustable spacer 106 may be adjusted, the adjustable spacer 106 is suitable for use with various electrical components (e.g., transformers, inductors, etc.) that have the same core size, but different air gap sizes, configurations of windings (e.g., windings 102), number of windings (e.g., windings 102), material tolerances, etc. In particular, one spacer (e.g., adjustable spacer 106) may be included in electrical components of a particular core size, where each component requires a different thickness of spacer, rather than using multiple spacers or spacers of different thicknesses to achieve the desired thickness. As can be appreciated, a spacer with an adjustable thickness allows for one part number to be used with a core size family (e.g., electrical components of a given core size) as the adjustable spacer 106 accommodates a range of thicknesses needed for the different electrical components. Additionally, adjustable spacer 106 may be sized and shaped for use with cores of different sizes and/or shapes.

In some embodiments, in addition to adjusting the thickness of the adjustable spacer 106, the adjustment mechanism 108 also permits the adjustable spacer 106 to be separated into a first segment 110 and a second segment 112, to enable the first segment 110 to be detachably coupled to the second segment 112. The disks 110 and 112 are also referred to herein as disks. As shown in the exploded view of Fig. 1, the first disk 110 of the adjustable spacer 106 is detached from the second disk 112 of the adjustable spacer 106. In some embodiments, the first disk 110 and the second disk 112 can move relative to the other, so as to adjust in thickness, and are unable to be separated.

As shown in Fig. 1, the adjustable spacer 106 is positioned between windings 102 within the transformer 100. In the illustrated embodiment, the adjustable spacer 106 is centrally positioned within the transformer 100. By doing so, the adjustable spacer 106 is able to position the windings 102 away from the air gap of the transformer 100. In this manner, fringing flux associated with the transformer 100 may be reduced (e.g., as compared to a transformer including a spacer of a given thickness, etc.).

In the embodiment, the adjustment mechanism 108 is a screw-type adjustment mechanism and includes a matching pair of threads (i.e., threads 114 and threads 116). Threads 114 are included on the first disk 110 of the adjustable spacer 106 and threads 114 are included on the second disk 112. As shown, the pair of threads 114, 116 are a matching pair of threads (e.g., threads 114 are internal threads and threads 116 are external threads), such that the disks 110, 112 of the adjustable spacer 106 may be screwed together and/or unscrewed. By screwing and/or unscrewing the adjustable spacer 106, the thickness of the adjustable spacer 106 may be altered, as described in more detail below. While the exemplary embodiment illustrates a screw- type adjustment mechanism that includes threads, other types of adjustment mechanisms are contemplated (e.g., an adjustment mechanism including springs, steps, wedges, etc.) for altering the thickness of the adjustable spacer 106.

The adjustable spacer 106 also includes a surface 118 on the first disk 110 and a surface 120 on the second disk 112. Surfaces 118 and 120 are generally planar and may interface with the windings 102. In particular, when the adjustable spacer 106 is adjusted to a desired thickness, surface 118 and surface 120 may both contact the windings 102. Contact of the surfaces 118, 120 with the windings 102 enables the adjustable spacer 106 to secure the windings 102 within the transformer 100 in a manner that ensures the compactness of the components within the transformer 100 and reduces fringing flux by positioning the windings away from the air gap of the transformer 100.

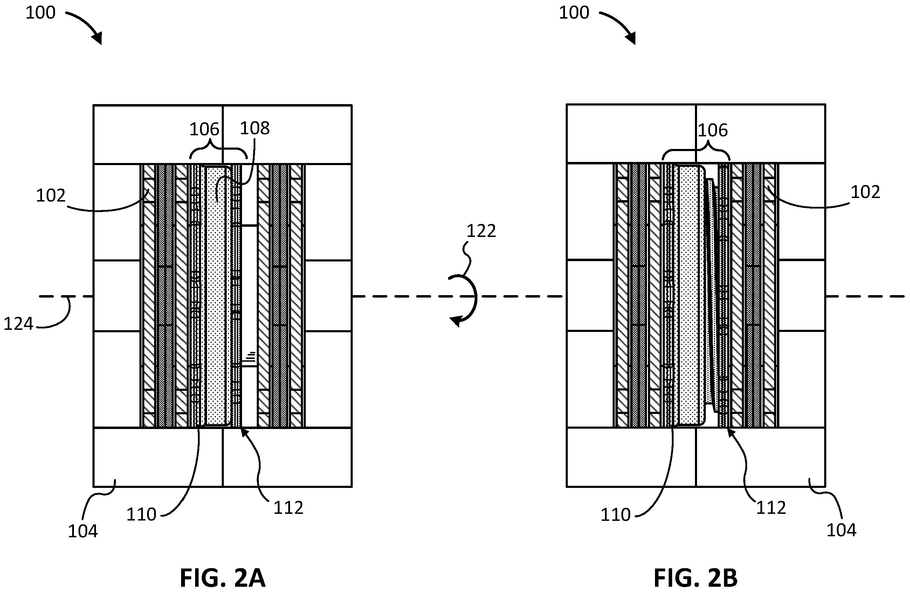

Figs. 2A-2B illustrate the adjustable spacer 106 as adjusted to a first thickness and to a second thickness. As shown in Fig. 2A, the adjustable spacer 106 is in a fully closed state. In the fully closed state, the adjustable spacer 106 is at a narrowest thickness such that threads 114 of first disk 110 are fully engaged with threads 116 of second disk 112. In the illustrated embodiment, in the fully closed stated, only the first disk 110 of the adjustable spacer 106 is in contact with the windings 102 (e.g., both of the disks 110, 112 are not in contact with the windings 102). When only one of the disks of the adjustable spacer 106 (e.g., either first disk 110 or second disk 112) is in contact with the windings 102, windings 102 are permitted to move relative to the core 104.

To secure the windings 102 within the transformer 100 (and prevent damage to the windings 102 and/or the core 104), the thickness of the adjustable spacer 106 may be altered or adjusted. In particular, the adjustable spacer 106 may be adjusted to an increased thickness by rotating second disk 112 with respect to disk 110, as indicated by arrow 122. As second disk 112 is rotated, second disk 112 moves outward along a central axis 124 of the transformer 100, based on the configuration of threads 114 and 116. After rotation of the second disk 112, threads 114 of the first disk 110 are partially engaged with the threads 116 of the second disk 112, such that the adjustable spacer 106 is in a partially opened state. In the partially opened state, as shown in Fig. 2B, both disks 110, 112 are in contact with the windings 102 via surface 118 and surface 120. When both disks of the adjustable spacer 106 engage with the windings 102, the windings 102 are secured in a manner that maintains the desired spacing and positioning of the components of the transformer 100 (e.g., compactness of the components, positioning the windings away from the air gap, etc.).

The adjustable spacer 106 also includes an opening 126 through the center of the adjustable spacer 106. The opening 126 permits passage of the core 104 (e.g., a post of the core 104) through the adjustable spacer 106. In the illustrated embodiment, threads 114 and 116 are generally positioned around the opening 126 (e.g., threads 116 are positioned on a shaft defining opening 126).

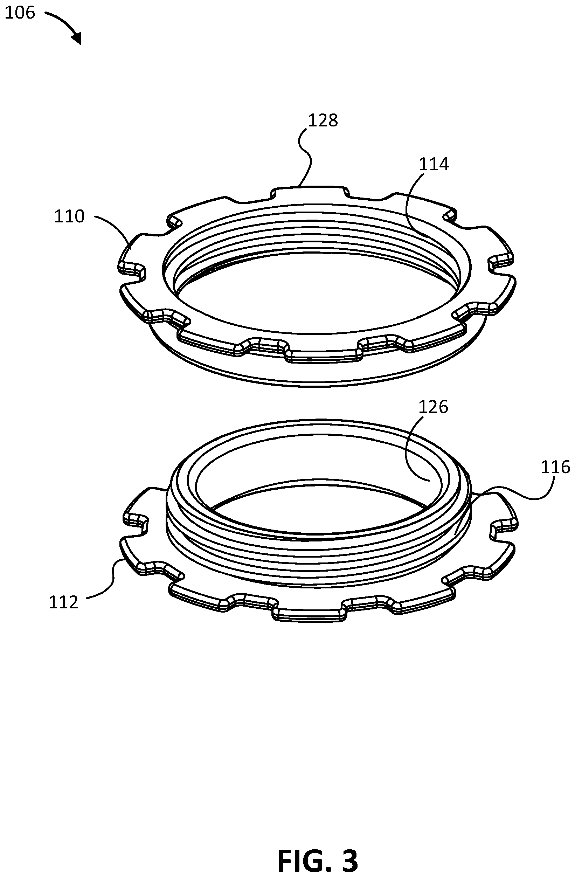

As best shown in Fig. 3, the adjustable spacer 106 optionally includes a plurality of notches 128 at the edge of surfaces 118, 120. Notches 128 facilitate grip of the adjustable spacer 106, for example, during rotation of the first disk 110 with respect to the second disk 112 (e.g., while adjusting the thickness of the adjustable spacer 106). Notches 128 may be rounded, squared, etc. or any other shape that provides an increased ability to grasp and/or rotate the adjustable spacer 106.

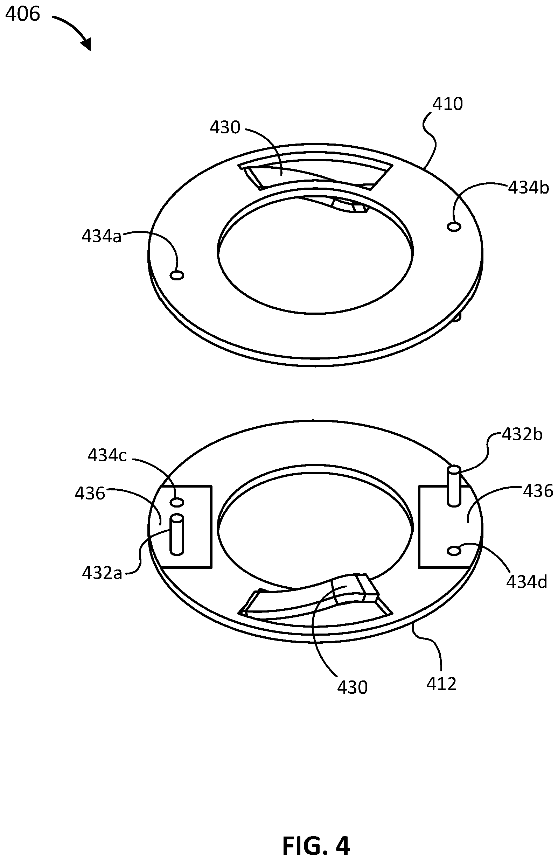

Fig. 4 illustrates an example of an adjustable spacer 406 not falling within the scope of the claims including a spring-type adjustment mechanism having at least one spring 430. Similar to adjustable spacer 106, the adjustable spacer 406 is suitable for use in electrical components (e.g., transformers, inductors, etc.) including transformer 100, for example, to separate and/or provide space between windings 102 included the transformer 100. Adjustable spacer 406 includes a first segment or disk 410 and a second segment or disk 412. In the illustrated embodiment, the adjustable spacer 406 includes two springs 430, with one spring 430 positioned on the first disk 410 and the other spring 430 positioned on the second disk 412. While each segment is depicted as including one spring, each segment of adjustable spacer 406 may include a greater or lesser number of springs. The springs 430 are equally spaced about the adjustable spacer 406 to bias the adjustable spacer 406 to a uniform thickness (e.g., such that disk 410 is parallel to disk 412). As illustrated, springs 430 are cantilever springs, although other types of springs may be suitable (e.g., coil spring, etc.) for inclusion within the spring-type adjustment mechanism of the adjustable spacer 406.

Adjustable spacer 406 also includes pins 432 and corresponding holes 434 for alignment of the first disk 410 and the second disk 412. In particular, the first disk 410 includes pin 432a which is received by hole 434a of second disk 412 and pin 432b which is received by hole 434b of second disk 412. Second disk 412 likewise includes a pin (not shown) which is received in hole 434c of first disk 410 and a pin (not shown) which is received in hole 434d of first disk 410. While each segment includes two pins, a greater or lesser number of pins (and corresponding holes) may be included in each segment of the adjustable spacer 406. As illustrated in Fig. 4, each disk 410, 412 include the same configuration of springs 430, pins 432 and holes 434, such that the first disk 410 of adjustable spacer 406 is identical to the second disk 412 of adjustable spacer 406. As can be appreciated, implementing the same configuration for the first disk 410 and the second disk 412 of the adjustable spacer 412 provides simplified manufacturing.

Due to the inclusion of springs 430, adjustable spacer 406 is biased to a largest (e.g., widest) thickness. To reduce the thickness of adjustable spacer 406, the adjustable spacer 406 is compressed as desired. In particular, when included in a transformer (e.g., transformer 100), windings 102 compress the springs 430 of the adjustable spacer 406. The compression of the springs 430 of the adjustable spacer 406 is based at least in part on the available space within the winding area of the transformer 100 (e.g., within an area defined by the core 104, etc.). In connection therewith, the inclusion of springs 430 bias the windings 102 of the transformer 100 towards the core 104, such that the windings 102 are positioned away from the air gap (e.g., to reduce fringing flux, etc.). Additionally, the adjustable spacer 406 further includes a plurality of stoppers 436 to ensure that pins 432 do not interfere with the windings 102 when the adjustable spacer 406 is compressed (e.g., stoppers 436 prevent pins 432 from fully passing through the disks 410, 412). As can be appreciated, in embodiments where springs 430 are cantilever springs, adjustable spacer 406 is formed of a material that permits springs 430 to flex and compress as desired (e.g., plastic, etc.).

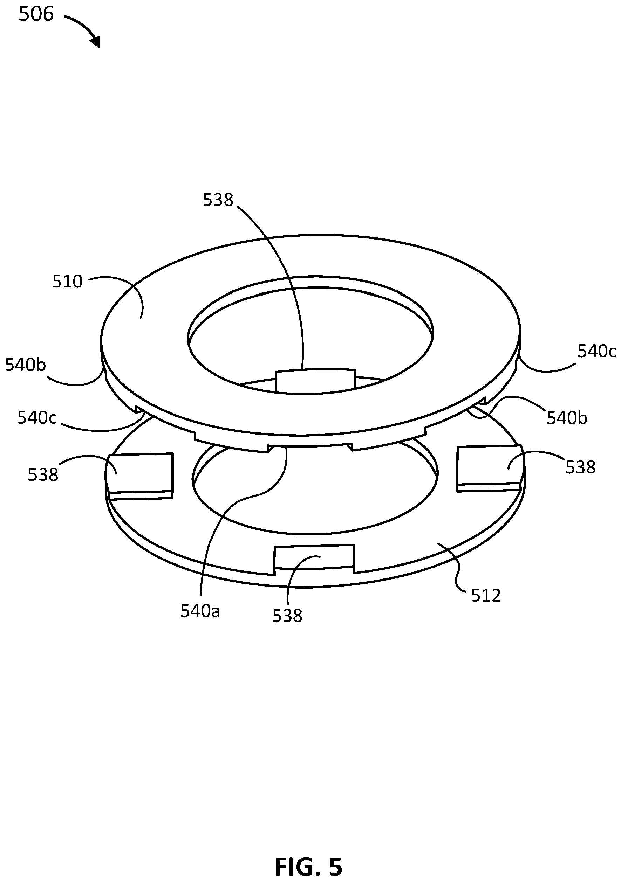

Fig. 5 illustrates another embodiment of an adjustable spacer 506 that includes a step-type adjustment mechanism having at least one protruding step 538 and at least one recessed step 540. Similar to adjustable spacer 106, the adjustable spacer 506 is suitable for use in electrical components (e.g., transformers, inductors, etc.) including transformer 100, for example, to separate and/or provide space between windings 102 included the transformer 100. Adjustable spacer 506 includes a first segment or disk 510 and a second segment or disk 512. As shown in the illustrated embodiment, the first disk 510 includes a plurality of protruding steps 538 which are equally spaced about the first disk 510. In particular, first disk 510 includes four protruding steps 538 which are positioned at an outer edge of first disk 510, although a greater or lesser number of steps 538 may be included. The second disk 512 includes a plurality of corresponding recessed steps 540 of varying depths which are configured to receive the protruding steps 538 of first disk 510. In particular, second disk 512 includes a set of recessed steps 540a of a first depth, a set of recessed steps 540b of a second depth, and a set of recessed steps 540c of a third depth. Each set of recessed steps 540 (e.g., recessed steps 540a of the first depth) includes a number of steps corresponding to number of protruding steps 538 of the first disk 510, such that each of the protruding steps 538 of the first disk 510 may be received within only one set of recessed steps 540 of the second disk 512 (e.g., received within recessed steps 540a of the first depth) at a given time. While only three sets of recessed steps 540 of varying depths are depicted in the exemplary embodiment, a greater or lesser number of sets may be included to provide a differing range of thicknesses of the adjustable spacer 506.

In the illustrated embodiment, the protruding steps 538 of the first disk 510 are aligned with the first set of recessed steps 540a. When the first disk 510 is coupled to the second disk 512 by inserting the protruding steps 538 into the recessed steps 540a, the thickness of the adjustable spacer 506 is at a narrowest thickness (e.g., based on the depth of the recessed steps 540a). To adjust (e.g., increase) the thickness of the adjustable spacer 506, the first disk 510 may be rotated such that the protruding steps 538 align with and are inserted into the recessed steps 540b of the second disk 512, which have a smaller depth than recessed steps 540a. In this way, when the protruding steps 538 are inserted into the recessed steps 540b of the second disk 512, the thickness of the adjustable spacer 506 is increased as the recessed steps 540b are of a shallower depth than recessed steps 540a. Adjustable spacer 506 is at a greatest thickness when the protruding steps 538 of the first disk 510 are inserted into the recessed steps 540c of the second disk 512, as these recessed steps have the smallest depth. Alternatively, rather than including one set of protruding steps of a given height and multiple sets of recessed steps of varying depths, adjustable spacer 506 may alternatively include multiple sets of protruding steps of varying heights and one set of recessed steps of a given depth. As compared to the screw-type adjustment mechanism 108 of adjustable spacer 106 and the spring-type adjustment mechanism of the adjustable spacer 406 which both provide a continuous transition along the range of thicknesses of the adjustable spacer, the adjustment mechanism of adjustable spacer 506 instead provides a series of stepped or graduated thicknesses for the adjustable spacer (e.g., three distinct thicknesses).

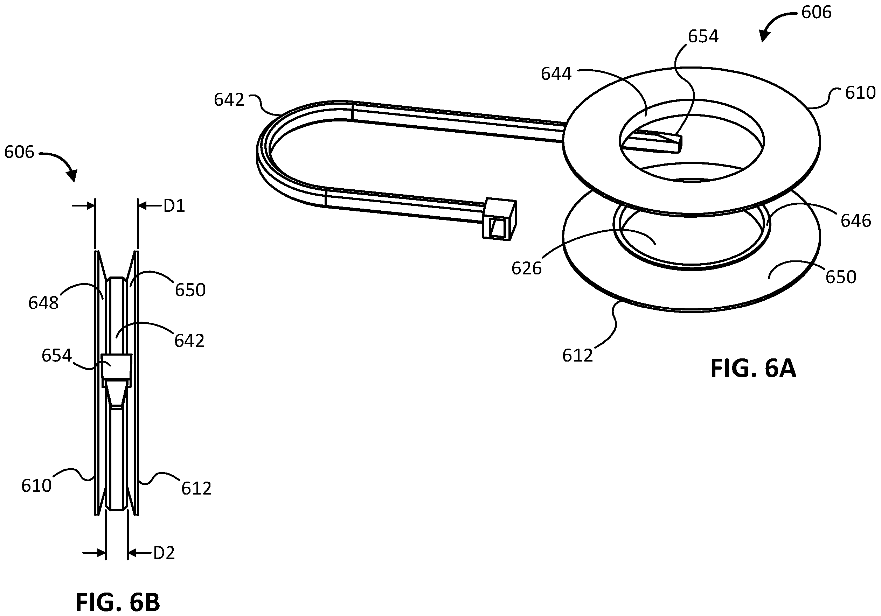

Figs. 6A-6B illustrate another example of an adjustable spacer 606 not falling within the scope of the claims including a wedge-type adjustment mechanism that includes a fastener, such as a cable tie 642. Similar to adjustable spacers 106, 406 and 506, the adjustable spacer 606 is suitable for use in electrical components (e.g., transformers, inductors, etc.) including transformer 100, for example, to separate and/or provide space between windings 102 included the transformer 100. Adjustable spacer 606 includes a first segment or disk 610 and a second segment or disk 612, each of which define a central opening 626. The first disk 610 includes a lip 644 at the opening 626 and the second disk 612 also includes a lip 646 at the opening 626. In the illustrated embodiment, the first disk 610 includes an angled surface 648, which slopes down from the lip 644 towards an outer edge of the first disk 610. The second disk 612 also includes an angled surface 650, which slopes down from the lip 646 towards an outer edge of the second disk 612. In the illustrated embodiment, both disk 610 and 612 have the same configuration of lips 644, 646 and angled surfaces 648, 650, such that the first disk 610 of adjustable spacer 606 is identical to the second disk 612 of adjustable spacer 606. As can be appreciated, implementing the same configuration for the first disk 610 and the second disk 612 of the adjustable spacer 606 provides simplified manufacturing. The adjustable spacer 606 further includes a cable tie 642. The cable tie 642 is generally a one-piece, self-locking fastener that includes a slot 652 for receiving and securing an end 654 of the cable tie 642 to form a loop.

As best shown in Fig. 6B, when the adjustable spacer 606 is assembled, the cable tie 642 is coupled to the first disk 610 and the second disk 612. In particular, the end 654 of the cable tie 642 is inserted through the slot 652 to form a loop of a desired size that interfaces with the angled surface 648 of the first disk 610 and the angled surface 650 of the second disk 612. To adjust the thickness D1 of the adjustable spacer 606, the loop of the cable tie 642 may be adjusted (e.g., tightened) by pulling the end 654 through the slot 652. In particular, to increase the thickness D1 of the adjustable spacer 606, the cable tie 642 is tightened, resulting in a smaller loop, which pushes against the angled surfaces 648, 650 in a wedge-like manner to move the first disk 610 away from the second disk 612. At a widest thickness (e.g., a tightest loop of the cable tie 642), the lips 644, 646 catch the cable tie 642 and prevent further tightening of the cable tie 642. The thickness D1 of the adjustable spacer 606 may additionally be adjusted by altering the width D2 of the cable tie 642. Similar to the screw-type adjustment mechanism 108 of adjustable spacer 106 and the spring-type adjustment mechanism of the adjustable spacer 406, the wedge-type adjustment mechanism of the adjustable spacer 606 provides a continuous transition along the range of thicknesses of the adjustable spacer 606 (e.g., as cable tie 642 is tightened).

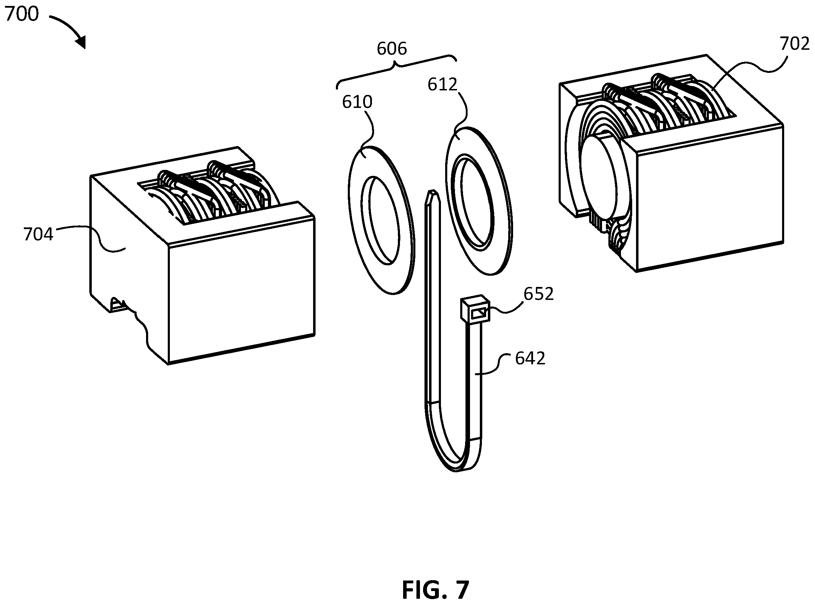

An exploded view of a transformer according to another example not falling within the scope of the claims is illustrated in Fig. 7 and indicated generally by reference number 700. The transformer 700 is similar to transformer 100. However, instead of including adjustable spacer 106, transformer 700 includes adjustable spacer 606. Similar to transformer 100, transformer 700 includes a plurality of windings 702 (e.g., primary and secondary windings) and a core 704 which magnetically couples the windings 702. As noted above, the transformer 700 also includes adjustable spacer 606 having an adjustable thickness D1, which serves to mechanically separate and support the windings 702. As shown in Fig. 7, the adjustable spacer 606 is positioned between windings 702 within a winding area of the transformer 700. In the illustrated embodiment, the adjustable spacer 606 is centrally positioned within the transformer 700. By doing so, the adjustable spacer 606 is able to position the windings 702 away from the air gap of the transformer 700. In this manner, fringing flux associated with the transformer 700 may be reduced (e.g., as compared to a transformer including a spacer of a given thickness, etc.).

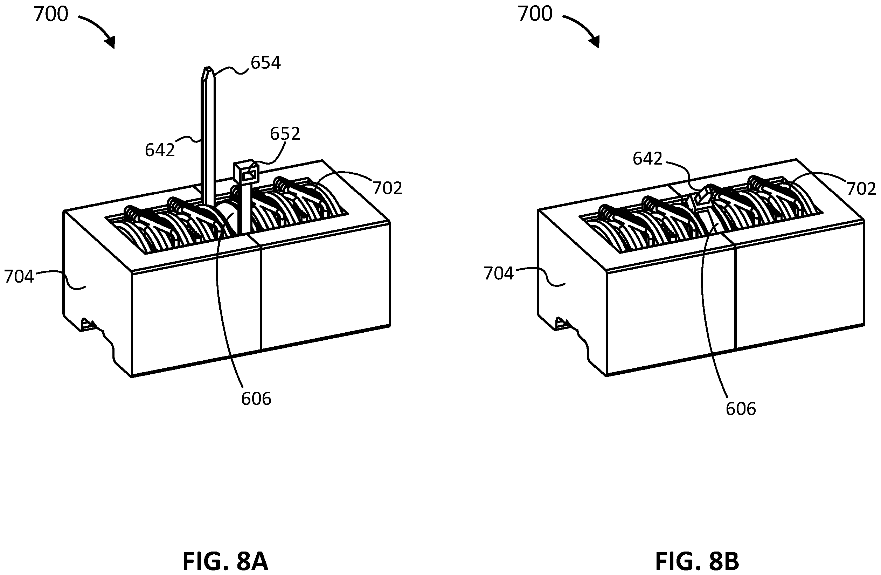

Figs. 8A-8B illustrate assembly of transformer 700. In particular, Fig. 8A illustrates the transformer 700 as assembled, prior to adjusting the thickness of the adjustable spacer 606. In particular, the windings 702, core 704, disk 610, cable tie 642, and disk 612 are aligned and assembled, however, the end 652 of the cable tie 642 has not yet been inserted through the slot 652. To ensure the windings 702 are positioned away from the air gap of the transformer 700 (e.g., to reduce fringing flux, etc.), the cable tie 642 is tightened by pulling the end 654 through the slot 652. As shown in Fig. 8B, after the cable tie 642 is tightened as desired, the end 654 may be removed (e.g., cut) from the cable tie 642.

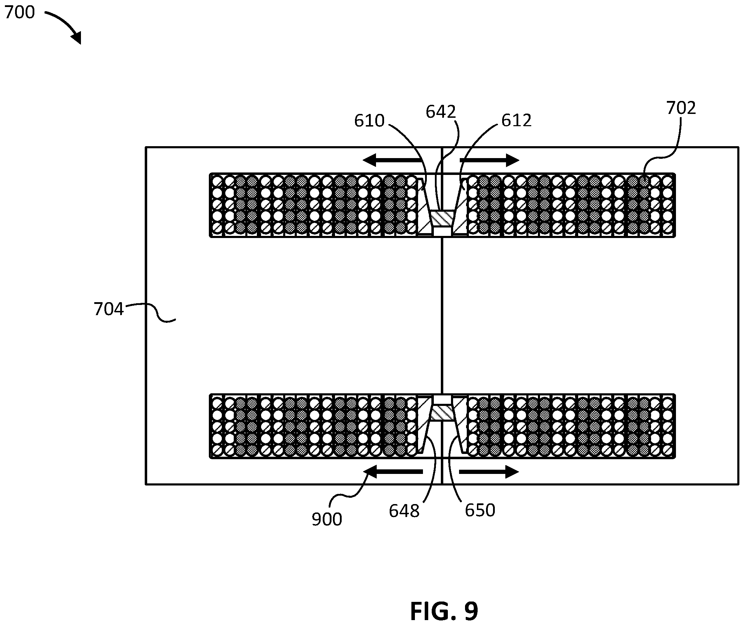

Fig. 9 illustrates a cross-sectional view of the transformer 700. As described above, the thickness D1 of the adjustable spacer 606 is adjusted by tightening the cable tie 642 (e.g., by pulling the end 654 through the slot 652). In particular, when the cable tie 642 is tightened, the cable tie 642 pushes against wedge-shaped disks 610, 612, which pushes the disks 610, 612 towards the windings 702, as indicated by arrows 900. In this manner, the windings 702 are positioned away from the air gap of the transformer 700 and are secured or fixed in such a position as the cable tie 642 is self- locking (e.g., inhibited from loosening).

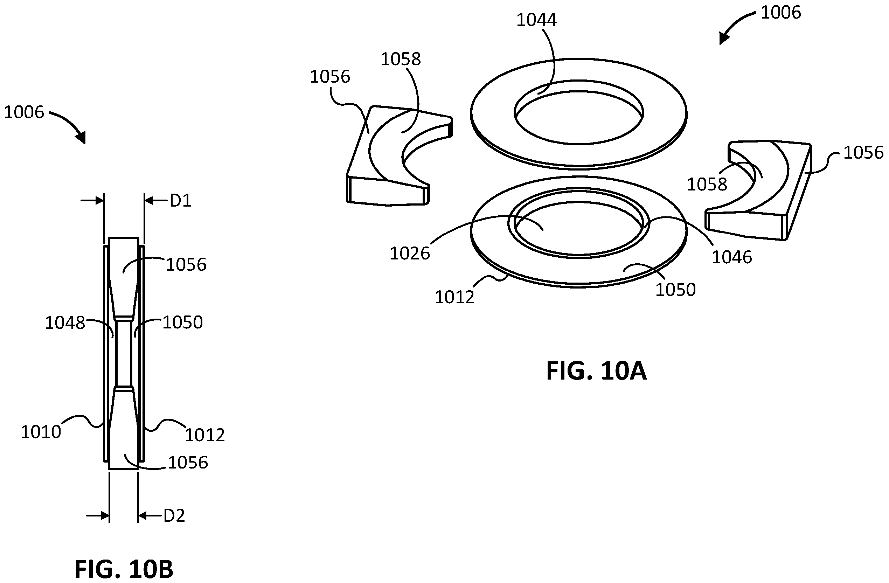

Figs. 10A-10B illustrate another example of an adjustable spacer 1006 not falling within the scope of the claims including a wedge-type adjustment mechanism that includes at least one wedge pin 1056. Similar to adjustable spacers 106, 406, 506 and 606, the adjustable spacer 1006 is suitable for use in electrical components (e.g., transformers, inductors, etc.) including transformer 100, for example, to separate and/or provide space between windings 102 included the transformer 100. Adjustable spacer 1006 includes a first segment or disk 1010 and a second segment or disk 1012, each of which define a central opening 1026. Similar to the wedge-shaped disks 610, 612, the first disk 1010 includes a lip 1044 at the opening 1026 and the second disk 1012 also includes a lip 1046 at the opening 1026. In the illustrated embodiment, the first disk 1010 includes an angled surface 1048, which slopes down from the lip 1044 towards an outer edge of the first disk 1010. The second disk 1012 also includes an angled surface 1050, which slopes down from the lip 1046 towards an outer edge of the second disk 1012. The adjustable spacer 1006 further includes at least one wedge pin 1056. In particular, the adjustable spacer 1006 includes two wedge pins 1056 which include angled surfaces 1058 that correspond to the angled surface 1048 of the first disk 1010 and the angled surface 1050 of the second disk 1012.

Referring to Fig. 10B, when the adjustable spacer 1006 is assembled, the wedge pins 1056 are coupled to the first disk 1010 and the second disk 1012. In particular, the wedge pins 1056 are inserted, or "wedged," between the first disk 1010 and the second disk 1012. Due to the angled surfaces 1058 of the wedge pins 1056, the thickness D1 of the adjustable spacer 1006 may be adjusted based on the amount of penetration of the wedge pins 1056 (e.g., the depth to which the wedge pins 1056 are inserted between the disks 1010, 1012). In particular, as the wedge pins 1056 are inserted between the first disk 1010 and the second disk 1012, the angled surfaces 1058 of the wedge pins 1056 interact with the angled surfaces 1048, 1050 to separate the first disk 1010 away from the second disk 1012. Similar to adjustable spacer 606, when the adjustable spacer 1006 is at a widest thickness (e.g., a greatest penetration by the wedge pins 1056), the lips 1044, 1046 catch the cable tie wedge pins 1056 and prevent further penetration of the wedge pins 1056. The thickness D1 of the adjustable spacer 1006 may additionally be adjusted by altering the width D2 of the wedge pins 1056. Similar to the screw-type adjustment mechanism 108 of adjustable spacer 106 and the spring-type adjustment mechanism of the adjustable spacer 406, the wedge-type adjustment mechanism of the adjustable spacer 1006 provides a continuous transition along the range of thicknesses of the adjustable spacer 1006 (e.g., as the wedge pins 1056 are inserted). Furthermore, while two wedge pins 1056 are included in adjustment mechanism 1006, a greater or lesser number of wedge pins 1056 may be suitable in other embodiments.

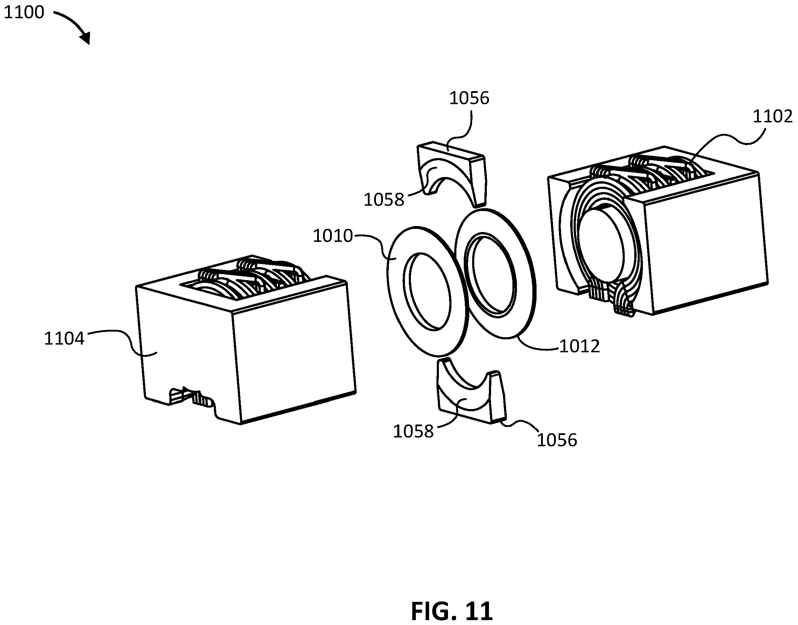

An exploded view of a transformer according to another example not falling within the scope of the claims is illustrated in Fig. 11 and indicated generally by reference number 1100 The transformer 1100 is similar to transformer 100. However, instead of including adjustable spacer 106, transformer 1100 includes adjustable spacer 1006. Similar to transformer 100, transformer 1100 includes a plurality of windings 1102 (e.g., primary and secondary windings) and a core 1104 which magnetically couples the windings 1102. As noted above, the transformer 1100 also includes adjustable spacer 1006 having an adjustable thickness D1, which serves to mechanically separate and support the windings 1102. As shown in Fig. 11, the adjustable spacer 1006 is positioned between windings 1102 within a winding area of the transformer 1100. In the illustrated embodiment, the adjustable spacer 1006 is centrally positioned within the transformer 1100. By doing so, the adjustable spacer 1006 is able to position the windings 1102 away from the air gap of the transformer 1100. In this manner, fringing flux associated with the transformer 1100 may be reduced (e.g., as compared to a transformer including a spacer of a given thickness, etc.).

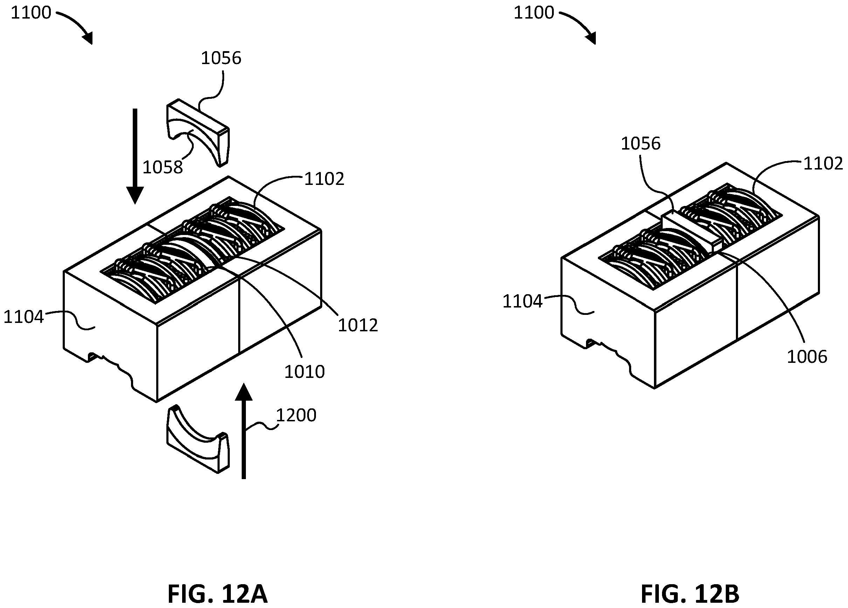

Figs. 12A-12B illustrate assembly of transformer 1100 not falling within the scope of the claims. In particular, Fig. 12A illustrates the transformer 1100 as assembled, prior to adjusting the thickness of the adjustable spacer 1006. In particular, the windings 1102, core 1104, disk 1010, and disk 1012 are aligned and assembled, however, the wedge pins 1056 have not yet been inserted between the disks 1010, 1012. To ensure the windings 1102 are positioned away from the air gap of the transformer 1100 (e.g., to reduce fringing flux, etc.), the wedge pins 1056 are inserted between disk 1010 and disk 1012, as indicated by arrows 1200. Prior to insertion, lips 1044 and 1046 maintain a small separation between the outer edges of disks 1010, 1012, such that the tip of the wedge pins 1056 may be inserted in the small separation. As shown in Fig. 12B, after the wedge pins 1056 are inserted to a desired depth (e.g., a desired amount of penetration of the wedge pins 1056), assembly of the transformer 1100 is complete.

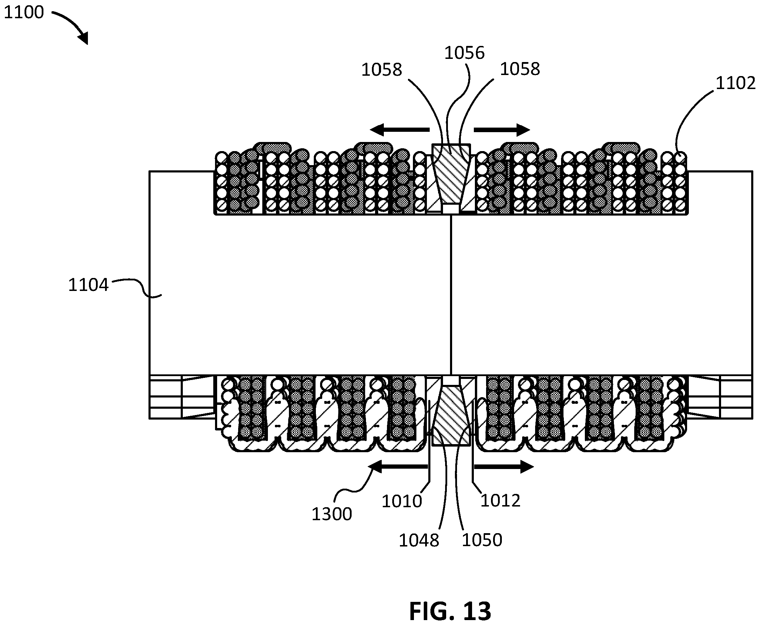

Fig. 13 illustrates a cross-sectional view of the transformer 1100. As described above, the thickness D1 of the adjustable spacer 1006 is adjusted by the amount of penetration of the wedge pins 1056 between the disks 1010, 1012. In particular, when as the wedge pins 1056 are inserted, the angled surfaces 1058 of the wedge pins 1056 push against the angled surfaces 1048, 1050 of the disks 1010, 1012, to adjust the disks 1010, 1012 towards the windings 1102, as indicated by arrows 1300. In this manner, the windings 1102 are positioned away from the air gap of the transformer 1100.

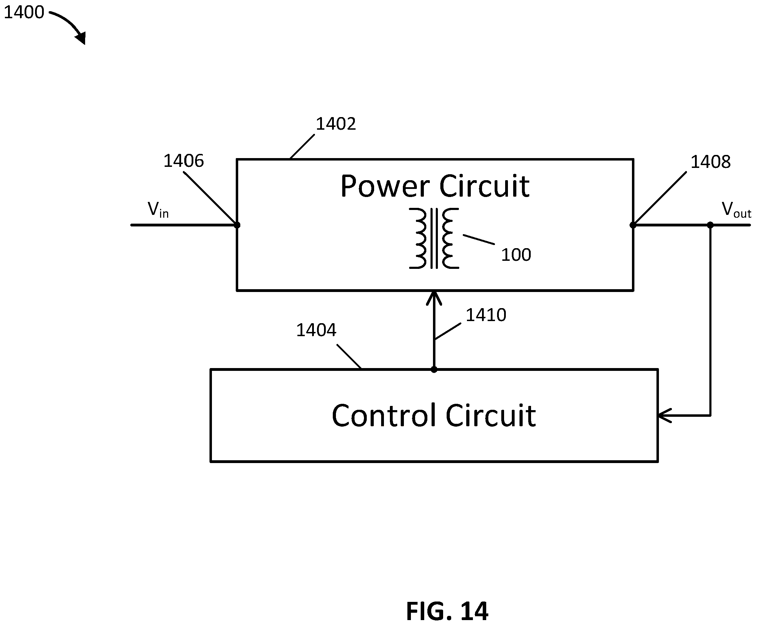

As described above, transformers 100 are suitable for use in a circuit board with any suitable circuit topologies, such as a power supply. In some embodiments, one or more of the transformers 100 is used in a switch-mode power supply (SMPS). Fig 14 illustrates a SMPS 1400 according to one example embodiment of the present disclosure that includes the transformer 100. In some examples, the SMPS 1400 includes the transformer 700 and/or the transformer 1100. As shown in Fig. 14, the SMPS 1400 includes a power circuit 1402 and a control circuit 1404. The power circuit 1402 includes an input 1406 for receiving an input voltage Vin and an output 1408 for providing an output voltage Vout. As shown in Fig. 14, the control circuit 1404 is coupled to the power circuit 1402 for regulating the output voltage Vout. Alternatively, the control circuit 1404 is coupled to the power circuit 602 for regulating the input voltage Vin. The control circuit 1404 is configured to generate a control signal 1410. The components included in SMPS 1400 are exemplary only and the transformer 100 is contemplated for use in other circuit topologies, including any other suitable SMPS topologies.

Example embodiments described herein may facilitate use of an adjustable spacer within an electrical component, such as a transformer or an inductor, which provides advantages over use of spacers of a given thickness (e.g., a PCB spacer). For example, the adjustable spacer is adjustable within a range of thicknesses such that a single adjustable spacer may be used with multiple electrical components having the same core size, but different air gaps. The ability to redefine the thickness of the adjustable spacer guarantees the compactness of the materials within the electrical component to comply with various material tolerances. The adjustable spacer also accurately permits a stable leakage inductance. Additionally, by keeping windings within the electrical component away from the air gap, fringing flux may be reduced.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the claims.

## Claims

1. A switch-mode power supply (1400), comprising:
at least one input (1406);
at least one output (1408); and
a power circuit (1402) coupled between the at least one input (1406) and the at least one output (1408) for converting an input voltage or current to an output voltage or current;
the power circuit (1402) including an electrical component (100) having windings (102), an adjustable spacer (106, 506) positioned between the windings (102), and a core (104) magnetically coupling the windings (102);
the adjustable spacer (106, 506) including a thickness that is adjustable, **characterized by** the adjustable spacer comprising:
a first disk (110, 510);
a second disk (112, 512); and
means for engaging the first and second disks to adjust a spacing between the first and second disks via rotation of the first disk with respect to the second disk to adjust the thickness.

2. The power supply of of claim 1, wherein the means includes a pair of threads (114, 116) configured to adjust the thickness.

3. The power supply of claim 2, wherein the means includes a plurality of notches (128).

4. The power supply of claim 1, wherein the means includes a plurality of steps (538, 540).

5. The power supply of any preceding claim, wherein the first disk (110, 410, 510, 610, 1010) is the same as the second disk (112, 412, 512, 612, 1012).

6. The power supply of any preceding claim, wherein the electrical component (100, 700, 1100) is an inductor.

7. The power supply of any preceding claim, wherein the electrical component (100, 700, 1100) is a transformer.

8. A method of adjusting a space between adjacent windings (102) of an electrical component (100) of a power circuit of a switch-mode power supply, the electrical component comprising a first winding (102), a second winding (102), an adjustable spacer (106, 506) positioned between the first and second windings (102) and comprising a first disk (110, 510) having a first engagement structure and a second disk (112, 512) having a second engagement structure configured to mate with the first engagement structure, and a core (104) magnetically coupling the first and second windings (102), the method comprising:
rotating the first disk (110, 510) with respect to the second disk (112, 512) to alter a rotational engagement of the first engagement structure with the second engagement structure;
wherein a first space between the first and second windings (102) at a first rotational engagement of the first and second disks (112, 512) is different from a second space between the first and second windings (102) at a second rotational engagement of the first and second disks (112, 512).

9. The method of claim 8, wherein the first engagement structure comprises a threaded structure (114, 116); and
wherein the second engagement structure comprises a threaded structure (114, 116) configured to mate with the threaded structure (114, 116) of the first engagement structure.

10. The method of any one of claims 8-9, wherein rotating the first disk (110, 510) with respect to the second disk (112, 512) comprises:
rotating the first disk (110, 510) in a first rotational direction with respect to the second disk (112, 512) to increase the space between a surface of the first disk (110, 510) and a surface of the second disk (112, 512) from the first space to the second space; and
rotating the first disk (110, 510) in a second rotational direction with respect to the second disk (112, 512) to decrease the space between the surface of the first disk (110, 510) and the surface of the second disk (112, 512) from the second space to the first space.

11. The method of claim 8, wherein the first engagement structure comprises a plurality of protruding steps (538);
wherein the second engagement structure comprises plurality of recessed steps (540) configured to mate with the plurality of protruding steps (538), the plurality of recessed steps (540) comprising:
a first set of recessed steps (540) having a first depth; and
a second set of recessed steps (540) having a second depth different from the first depth; and
wherein rotating the first disk (510) with respect to the second disk (512) comprises:
rotating the first disk (510) with respect to the second disk (512) to position the plurality of protruding steps (538) within the first set of recessed steps (540) to separate a surface of the first disk (510) from a surface of the second disk (512) by the first space; and
rotating the first disk (510) with respect to the second disk (512) to position the plurality of protruding steps (538) within the second set of recessed steps (540) to separate the surface of the first disk (510) from the surface of the second disk (512) by the second space.

## Patentansprüche

1. Schaltstromversorgung (1400), Folgendes umfassend:
mindestens einen Eingang (1406);
mindestens einen Ausgang (1408); und
eine Leistungsschaltung (1402), die zwischen dem mindestens einen Eingang (1406) und dem mindestens einen Ausgang (1408) gekoppelt ist, um eine Eingangsspannung oder einen Eingangsstrom in eine Ausgangsspannung oder einen Ausgangsstrom umzuwandeln;
wobei die Leistungsschaltung (1402) ein elektrisches Bauteil (100), das Wicklungen (102) aufweist, einen einstellbaren Abstandshalter (106, 506), der zwischen den Wicklungen (102) positioniert ist, und einen Kern (104), der die Wicklungen (102) magnetisch koppelt, beinhaltet;
wobei der einstellbare Abstandshalter (106, 506) eine Dicke beinhaltet, die einstellbar ist, **dadurch gekennzeichnet, dass** der einstellbare Abstandshalter Folgendes umfasst:
eine erste Scheibe (110, 510);
eine zweite Scheibe (112, 512); und
ein Mittel, um die erste und zweite Scheibe in Eingriff zu nehmen, um durch Drehen der ersten Scheibe in Bezug auf die zweite Scheibe einen Abstand zwischen der ersten und zweiten Scheibe einzustellen, um die Dicke einzustellen.

2. Stromversorgung nach Anspruch 1, wobei das Mittel ein Paar von Gewinden (114, 116) beinhaltet, die dazu konfiguriert sind, die Dicke einzustellen.

3. Stromversorgung nach Anspruch 2, wobei das Mittel eine Vielzahl von Kerben (128) beinhaltet.

4. Stromversorgung nach Anspruch 1, wobei das Mittel eine Vielzahl von Stufen (538, 540) beinhaltet.

5. Stromversorgung nach einem der vorstehenden Ansprüche, wobei die erste Scheibe (110, 410, 510, 610, 1010) die gleiche ist wie die zweite Scheibe (112, 412, 512, 612, 1012).

6. Stromversorgung nach einem der vorstehenden Ansprüche, wobei das elektrische Bauteil (100, 700, 1100) ein Induktor ist.

7. Stromversorgung nach einem der vorstehenden Ansprüche, wobei das elektrische Bauteil (100, 700, 1100) ein Transformator ist.

8. Verfahren zum Einstellen eines Raumes zwischen benachbarten Wicklungen (102) eines elektrischen Bauteils (100) einer Leistungsschaltung einer Schaltstromversorgung, wobei das elektrische Bauteil eine erste Wicklung (102), eine zweite Wicklung (102), einen einstellbaren Abstandshalter (106, 506), der zwischen der ersten und zweiten Wicklung (102) positioniert ist und eine erste Scheibe (110, 510), die eine erste Eingriffsstruktur aufweist, und eine zweite Scheibe (112, 512), die eine zweite Eingriffsstruktur aufweist, die dazu konfiguriert ist, mit der ersten Eingriffsstruktur zusammenzupassen, und einen Kern (104), der die erste und die zweite Wicklung (102) magnetisch koppelt, umfasst, wobei das Verfahren Folgendes umfasst:
Drehen der ersten Scheibe (110, 510) in Bezug auf die zweite Scheibe (112, 512), um einen Dreheingriff der ersten Eingriffsstruktur mit der zweiten Eingriffsstruktur zu ändern;
wobei sich ein erster Raum zwischen der ersten und zweiten Wicklung (102) bei einem ersten Dreheingriff der ersten und zweiten Scheibe (112, 512) von einem zweiten Raum zwischen der ersten und zweiten Wicklung (102) bei einem zweiten Dreheingriff der ersten und zweiten Scheibe (112, 512) unterscheidet.

9. Verfahren nach Anspruch 8, wobei die erste Eingriffsstruktur eine Gewindestruktur (114, 116) umfasst; und
wobei die zweite Eingriffsstruktur eine Gewindestruktur (114, 116) umfasst, die dazu konfiguriert ist, mit der Gewindestruktur (114, 116) der ersten Eingriffsstruktur zusammenzupassen.

10. Verfahren nach einem der Ansprüche 8-9, wobei Drehen der ersten Scheibe (110, 510) in Bezug auf die zweite Scheibe (112, 512) Folgendes umfasst:
Drehen der ersten Scheibe (110, 510) in einer ersten Drehrichtung in Bezug auf die zweite Scheibe (112, 512), um den Raum zwischen einer Fläche der ersten Scheibe (110, 510) und
einer Fläche der zweiten Scheibe (112, 512) von dem ersten Raum zu dem zweiten Raum zu vergrößern; und
Drehen der ersten Scheibe (110, 510) in einer zweiten Drehrichtung in Bezug auf die zweite Scheibe (112, 512), um den Raum zwischen der Fläche der ersten Scheibe (110, 510) und der Fläche der zweiten Scheibe (112, 512) von dem zweiten Raum zu dem ersten Raum zu verringern.

11. Verfahren nach Anspruch 8, wobei die erste Eingriffsstruktur eine Vielzahl von vorstehenden Stufen (538) umfasst;
wobei die zweite Eingriffsstruktur eine Vielzahl von eingelassenen Stufen (540) umfasst, die dazu konfiguriert ist, mit der Vielzahl von vorstehenden Stufen (538) zusammenzupassen, wobei die Vielzahl von eingelassenen Stufen (540) Folgendes umfasst:
einen ersten Satz von eingelassenen Stufen (540), die eine erste Tiefe aufweisen; und
einen zweiten Satz von eingelassenen Stufen (540), die eine zweite Tiefe aufweisen, die von der ersten Tiefe verschieden ist; und
wobei Drehen der ersten Scheibe (510) in Bezug auf die zweite Scheibe (512) Folgendes umfasst:
Drehen der ersten Scheibe (510) in Bezug auf die zweite Scheibe (512), um die Vielzahl von vorstehenden Stufen (538) innerhalb des ersten Satzes von eingelassenen Stufen (540) zu positionieren, um eine Fläche der ersten Scheibe (510) von einer Fläche der zweiten Scheibe (512) durch den ersten Raum zu trennen; und
Drehen der ersten Scheibe (510) in Bezug auf die zweite Scheibe (512), um die Vielzahl von vorstehenden Stufen (538) innerhalb des zweiten Satzes von eingelassenen Stufen (540) zu positionieren, um eine Fläche der ersten Scheibe (510) von der Fläche der zweiten Scheibe (512) durch den zweiten Raum zu trennen.

## Revendications

1. Alimentation à découpage (1400), comprenant :
au moins une entrée (1406) ;
au moins une sortie (1408) ; et
un circuit de puissance (1402) couplé entre l'au moins une entrée (1406) et l'au moins une sortie (1408) pour convertir une tension ou un courant d'entrée en une tension ou un courant de sortie ;
le circuit de puissance (1402) comportant un composant électrique (100) ayant des enroulements (102), un espaceur réglable (106, 506) positionné entre les enroulements (102), et un noyau (104) couplant magnétiquement les enroulements (102) ;
l'espaceur réglable (106, 506) comportant une épaisseur qui est réglable, **caractérisée par** l'espaceur réglable comprenant :
un premier disque (110, 510) ;
un second disque (112, 512) ; et
un moyen de mise en prise des premier et second disques pour régler un espacement entre les premier et second disques via la rotation du premier disque par rapport au second disque pour régler l'épaisseur.

2. Alimentation selon la revendication 1, dans laquelle le moyen comporte une paire de fils (114, 116) configurés pour régler l'épaisseur.

3. Alimentation selon la revendication 2, dans laquelle le moyen comporte une pluralité d'encoches (128).

4. Alimentation selon la revendication 1, dans laquelle le moyen comporte une pluralité d'étages (538, 540).

5. Alimentation selon une quelconque revendication précédente, dans laquelle le premier disque (110, 410, 510, 610, 1010) est le même que le second disque (112, 412, 512, 612, 1012).

6. Alimentation selon une quelconque revendication précédente, dans laquelle le composant électrique (100, 700, 1100) est un inducteur.

7. Alimentation selon une quelconque revendication précédente, dans laquelle le composant électrique (100, 700, 1100) est un transformateur.

8. Procédé de réglage d'un espace entre des enroulements (102) adjacents d'un composant électrique (100) d'un circuit de puissance d'une alimentation à découpage, le composant électrique comprenant un premier enroulement (102), un second enroulement (102), un espaceur réglable (106, 506) positionné entre les premier et second enroulements (102) et comprenant un premier disque (110, 510) ayant une première structure de mise en prise et un second disque (112, 512) ayant une seconde structure de mise en prise configurée pour s'accoupler avec la première structure de mise en prise, et un noyau (104) couplant magnétiquement les premier et second enroulements (102), le procédé comprenant :
la rotation du premier disque (110, 510) par rapport au second disque (112, 512) pour modifier une mise en prise rotative de la première structure de mise en prise avec la seconde structure de mise en prise ;
dans lequel un premier espace entre les premier et second enroulements (102) au niveau d'une première mise en prise rotative des premier et second disques (112, 512) est différent d'un second espace entre les premier et second enroulements (102) au niveau d'une seconde mise en prise rotative des premier et second disques (112, 512).

9. Procédé selon la revendication 8, dans lequel la première structure de mise en prise comprend une structure filetée (114, 116) ; et
dans lequel la seconde structure de mise en prise comprend une structure filetée (114, 116) configurée pour s'accoupler avec la structure filetée (114, 116) de la première structure de mise en prise.

10. Procédé selon l'une quelconque des revendications 8 et 9, dans lequel la rotation du premier disque (110, 510) par rapport au second disque (112, 512) comprend :
la rotation du premier disque (110, 510) dans une première direction de rotation par rapport au second disque (112, 512) pour augmenter l'espace entre une surface du premier disque (110, 510) et
une surface du second disque (112, 512) du premier espace au second espace ; et
la rotation du premier disque (110, 510) dans une seconde direction de rotation par rapport au second disque (112, 512) pour diminuer l'espace entre la surface du premier disque (110, 510) et la surface du second disque (112, 512) du second espace au premier espace.

11. Procédé selon la revendication 8, dans lequel la première structure de mise en prise comprend une pluralité d'étages faisant saillie (538) ;
dans lequel la seconde structure de mise en prise comprend une pluralité d'étages encastrés (540) configurés pour s'accoupler avec la pluralité d'étages faisant saillie (538), la pluralité d'étages encastrés (540) comprenant :
un premier ensemble d'étages encastrés (540) ayant une première profondeur ; et
un second ensemble d'étages encastrés (540) ayant une seconde profondeur différente de la première profondeur ; et
dans lequel la rotation du premier disque (510) par rapport au second disque (512) comprend :
la rotation du premier disque (510) par rapport au second disque (512) pour positionner la pluralité d'étages faisant saillie (538) à l'intérieur du premier ensemble d'étages encastrés (540) pour séparer une surface du premier disque (510) d'une surface du second disque (512) par le premier espace ; et
la rotation du premier disque (510) par rapport au second disque (512) pour positionner la pluralité d'étages faisant saillie (538) à l'intérieur du second ensemble d'étages encastrés (540) pour séparer la surface du premier disque (510) de la surface du second disque (512) par le second espace.
